# EUROPEAN PATENT SPECIFICATION

(11) **EP 3 268 554 B1**
(45) Date of publication and mention of the grant of the patent: **13.04.2022**
(21) Application number: 16762131.7
(22) Date of filing: 29.02.2016
(51) Int. Cl.: E04C 2/38, E04B 1/61, E04F 15/02, F16B 12/26

(54) **A SPRING-LOADED SPLIT-TONGUE CONNECTOR SYSTEM**
FEDERGESPANNTES VERBINDERSYSTEM MIT GESPALTENER FEDER
SYSTÈME DE RACCORD À LANGUETTE DIVISÉE ET À RESSORT

(30) Priority: 09.03.2015 US 201514642679
(43) Date of publication of application: 17.01.2018
(73) Proprietor: Baker, Geoff, Sandisfield, MA 01255 (US)
(72) Inventor: Baker, Geoff, Sandisfield, MA 01255 (US)
(74) Representative: FRKelly
(86) International application number: PCT/US2016/020020
(87) International publication number: WO 2016/144584

(56) References cited:
- EP-A2- 1 691 002
- WO-A1-2004/059104
- WO-A1-2007/118352
- FR-A1- 2 209 024
- RU-U1- 140 440
- US-A1- 2011 197 535
- US-A1- 2011 197 535

## Description

### BACKGROUND OF INVENTION

### Field of Invention

This invention relates to a connector system for mechanically joining building panels (such as vinyl, laminate, or hardwood flooring); mechanically attaching decorative items (such as wall panels, ceiling panels, or automotive trim); mechanically attaching subsystems (such as automotive dashboards; or mechanically connecting elements of ready-to-assemble furniture.

### Prior Art

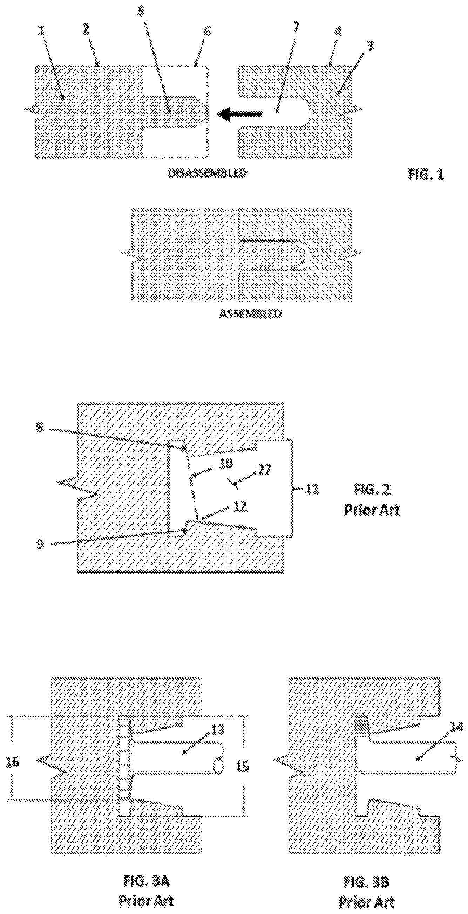

Figure 1 is a schematic drawing of the ubiquitous tongue and groove joining system typically used to join structural elements such as hardwood flooring. In the figure, hardwood flooring substrate element 1 with decorative surface 2 is to be connected to hardwood flooring substrate element 3 with decorative surface 4. A solid tongue 5 is machined from the solid substrate material with the resultant loss of saleable decorative surface 6. A mating groove 7 is formed in substrate element 3 to accept tongue 5. The structural elements are joined by moving element 3 in the direction of the arrow so as to cause mating groove 7 to receive tongue 5. The tongue is normally forcibly received into its mating groove and once received, the tongue, though held in place by friction, is not actively drawn into the groove

Additional prior art is found in US Patent Publication 2011/197535 of Baker and Vitale which discloses a method for "Laying and Mechanically Joining Building Panels or Construction Elements". The mating groove described in this patent application is shown in Figure 2. The Baker/Vitale patent application describes a system that is similar to that of the present patent application but differs in the following two significant ways:
1. The locking steps located at the distal end of the Baker/Vitale mating groove can only be fabricated using a device such as a rotary router cutter or a linear broach cutter, neither of which are consistent with high speed commercial flooring production.
2. The connector and mating groove interaction in the Baker/Vitale system is more sensitive to geometric deviations arising from manufacturing tolerances.

The differences noted above are a consequence of the mating groove geometry associated with the Baker/Vitale patent application. As seen in Figure 2, the mating groove 27 has steps 8 and 9 near its distal end. These steps are intended to interact with catches on a mating split-tongue connector in such a manner as to forcibly draw the connector into the groove.

As show in Figure 2, a hold region extension line 10 drawn parallel to step 8 does not exit the groove through the groove entrance region 11 but rather intersects the opposite sidewall of the groove at 12. Consequently, steps 8 and 9 must be formed using either a rotary router cutting tool 13 as shown in Figure 3A, or a linear broach cutting tool 14, as shown in Figure 3B. As seen in Figure 3A, the diameter 16 of the router cutting tool is limited to the maximum distance 15 between the outer surfaces of the steps. That is, in contradistinction to the connector system disclosed in this application, the diameter of the rotary cutting tool cannot be made larger than the maximum groove width.

Due to the limited rotary cutter diameter shown in Figure 3A, the rotary approach is precluded, by tool heating and chip removal considerations, from forming a mating groove at the speeds (i.e., approximately 360 linear feet per minute) consistent with economical production of the thousands of linear feet of groove typically required in commercial vinyl, laminate, or hardwood flooring. The broach approach to groove fabrication shown in Figure 3B, faces similar heating and chip removal obstacles relative to the same commercial application.

It should be noted, however, that although the rotary router approach is precluded, by economics, from use in high-speed flooring production; it can be used in other commercial applications, such as ready-to- assemble (RTA) furniture, where groove linear dimensions are only 2" to 3" and low-speed groove fabrication is economically viable.

### SUMMARY OF INVENTION

The objective of the present invention is to provide a versatile, robust, low cost connector system, suitable for the mechanical joining of two construction elements; having a mating groove geometry that can be formed at a rate required for economical production of vinyl, laminate, or hardwood flooring; and that is also suitable for a wide variety of other less demanding applications, e.g., ready-to-assemble furniture.

The invention comes in two preferred embodiments: a lateral embodiment and a normal embodiment. The advantage of the lateral embodiment relative to the normal embodiment is that, once assembled, the lateral embodiment is completely hidden from view; a feature that is very desirable for ready-to-assemble furniture. Conversely, the normal connector, though visible after assembly, is only visible from the under surface of flooring, its preferred application, and hence, is totally hidden from view by the upper decorative flooring surface. In addition, in a completed floor installation, the normal connector allows the removal of a damaged floor board without damage or intrusion into the floor boards adjoining it. This is because in flooring the direction of board removal must be normal to the flooring surface. Fortunately, in the normal embodiment, this direction is the same as the direction of tongue insertion and retraction, allowing the board to be removed from the tongue without damage to either the tongue, the board groove, or the adjoining boards. This feature has been nicely demonstrated in vinyl flooring hardware.

In ready-to-assemble furniture, unlike flooring, the direction of structural component removal is not restricted to a direction normal to the component decorative surface. Consequently, in ready- to-assemble furniture, the preferred application of the lateral connector; the structural component can almost always be removed from the connector element in a direction parallel to that of tongue insertion and retraction, and hence without damage to the connector tongue or the joined components.

Therefore, an aspect of some embodiments of the present invention relates to a connector system comprising a connector element, at least a first structural element and a second structural element. Each structural element has a first edge and a second opposite edge, and a corresponding mating groove that is formed in the structural elements extending from the first edge toward the second edge. The connector element comprises a base plate with split-tongue elements protruding from said base plate, each split-tongue element designed to mate with one of said mating grooves and having two flexible arms protruding from said base plate. The flexible arms have outward facing protruding nubs at their distal ends. Each mating groove comprises five regions arranged sequentially from the first edge toward the second edge: (a) a recess region for receiving the base plate of the connector element when the connector element is inserted into the respective groove; (b) a converging entry region having sidewalls that converge toward one another, each side wall having an end; (c) a minimum groove width apex region at the ends of the converging sidewalls; (d) a diverging hold region having sidewalls extending away from one another, and (e) a cap or termination region. The connector system is characterized in that said diverging hold region and said flexible arms and said nubs are disposed such that contact of the nubs with said groove diverging region imposes significant residual arm deflection after the connector element is fully inserted in the mating groove such that a force applied to the diverging hold region by said deflection of the flexible arms as a result of the contact between said nubs and said diverging hold region results in results in a force component tending to pull said connector split-tongue elements into said mating groove.

In a variant, an extent of insertion of the split-tongue element into said mating groove is limited by contact of said base plate and associated base plate extensions with said groove recess region.

In a variant, a force magnitude resisting entrance of said split-tongue element into its corresponding mating groove depends on a value of said converging angle of the converging entry region.

In a variant, a force magnitude resisting the removal of said connector element from said mating groove depends on a value of said divergence angle of the diverging hold region.

In a variant, a force magnitude resisting entrance of said split-tongue element into its corresponding mating groove depends on the geometric or material properties of the connector element.

In a variant, a force magnitude resisting the removal of said split-tongue element from its corresponding mating groove depends on the geometric or material properties of the connector element.

In a variant, the connector element is configured to be extruded from an extrudable material.

In a variant, the connector element is with said split-tongue elements protruding in the same direction from the ends of said base plate.

In a variant, the connector element is with said split-tongue elements protruding in opposite directions from opposite faces of said base plate.

In a variant, the outward facing protruding nub at distal ends of each flexible arm comprises an extension forming an outward facing insertion ramp to allow reduction of the converging angle of the converging entry region of the groove.

In a variant, the hold region extension line exits the groove via the mating groove entrance.

In a variant, each mating groove is configured to be cut into the structural element via a tool whose maximum diameter is greater than the maximum distance between the groove sidewalls.

### BRIEF DESCRIPTION OF DRAWINGS

Other aspects, features, and advantages of the present invention will become more fully apparent from the following detailed description, the appended claims, and the accompanying drawings in which similar element are given similar reference numerals.
Figure 1 is a side view of a typical solid tongue and groove connection system.
Figure 2 is a side view of the groove disclosed by Baker and Vitale in US Patent Publication 2011/197535.
Figures 3A shows the groove in Figure 2 being formed using a rotary router cutting tool.
Figures 3B shows the groove in Figure 2 being formed using a linear broach cutting tool.
Figure 4 is a lateral split-tongue connector system used to mechanically join two hardwood floor boards.
Figure 5 is a normal split-tongue connector system used to mechanically join two hardwood floor boards.
Figure 6 show the mating groove for a normal connector.
Figure 7 shows the mating groove for a lateral connector.
Figure 8 shows the manner in which the mating groove for a normal connector can be formed by four circular saw cuts.
Figure 9 shows a lateral split-tongue connector at three significant locations during installation into its mating groove: at the beginning of installation with no arm deflection; with the flexible arm nubs at the groove apex with maximum arm deflection; and with split-tongue fully inserted with residual arm deflection.
Figure 10 shows a normal split-tongue connector at two significant locations during installation into its mating groove: with the flexible arm nubs at the groove apex with maximum arm deflection; and with split-tongue fully inserted with residual arm deflection. In each case a dashed outline shows the location of the split-tongue at the beginning of installation with zero arm deflection.
Figure 11 shows details of the geometric relationship between the split-tongue arms and the mating groove hold region when the split-tongue is fully inserted into its mating groove.
Figure 12 shows the force components acting on a split-tongue flexible arm nub due to the interaction of the nub with the groove entry region as a normal connector moves into its mating groove in the absence of friction.
Figure 13 shows the effect of friction between the split-tongue flexible arm nub and the mating groove entry region on the force components in Figure 12 when the split tongue is moving into its mating groove.
Figure 14 shows the force components acting on a split-tongue flexible arm nub due to the interaction of the nub with the groove hold region as a normal connector moves into its mating groove in the absence of friction.
Figure 15 shows the effect of friction between the split-tongue flexible arm nub and the mating groove hold region on the force components in Figure 14 when the split tongue is moving into its mating groove. Figure 16 shows the force components acting on a split-tongue flexible arm nub due to the interaction of the nub with the groove hold region as a normal connector moves out of its mating groove in the absence of friction.
Figure 17 shows the effect of friction between the split-tongue flexible arm nub and the mating groove hold region on the force components in Figure 16 when the split tongue is moving out of its mating groove.
Figure 18 is a plot of the ratio of split-tongue force to arm displacement-force as a function of groove sidewall angle for different values of nub to ramp friction factor when the split-tongue is moving into or out of its mating groove.
Figure 19 shows an alternative connector and groove design.
Figure 20 shows the entry of the alternate connector into its mating groove.
Figure 21 shows the alternate connector at the condition of maximum arm deflection.
Figure 22 shows the alternate connector at its full insertion.

### DESCRIPTION OF PREFERRED EMBODIMENTS

From time-to-time, the present invention is described herein in terms of example environments. Description in terms of these environments is provided to allow the various features and embodiments of the invention to be portrayed in the context of an exemplary application. After reading this description, it will become apparent to one of ordinary skill in the art how the invention as defined by the appended claims can be implemented in different and alternative environments.

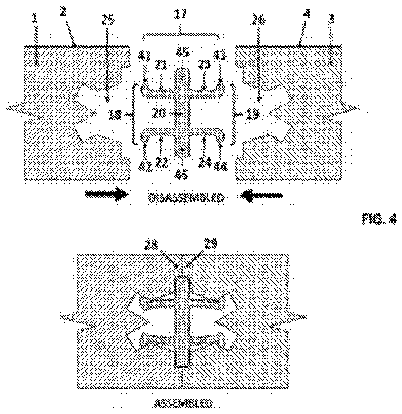

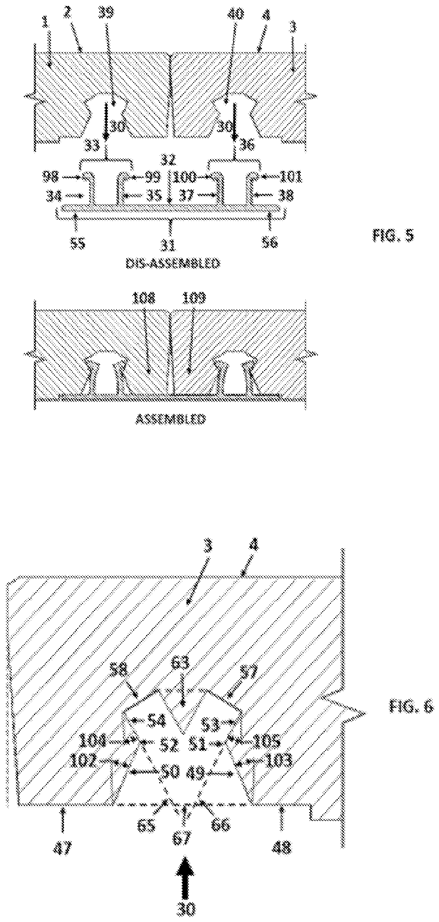

The connector system disclosed herein has two major preferred embodiments: a lateral connector system embodiment shown schematically in Figure 4 and a normal connector system embodiment shown schematically in Figure 5.

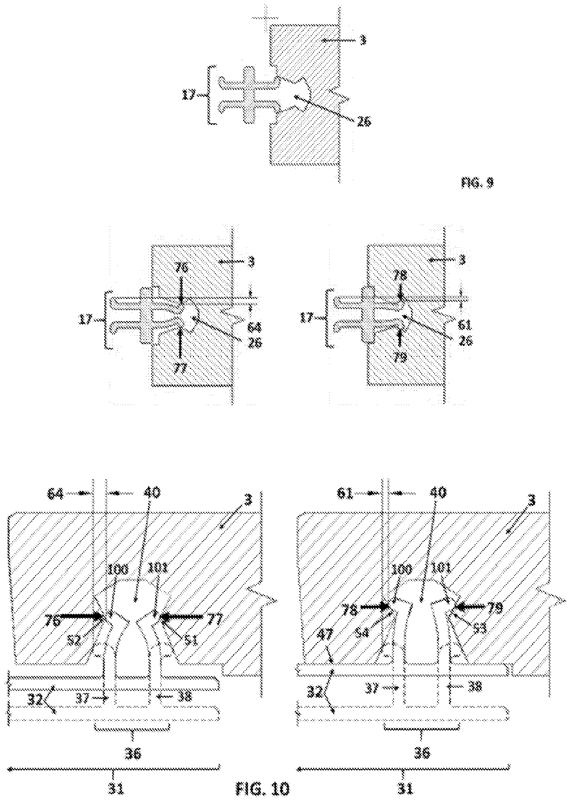

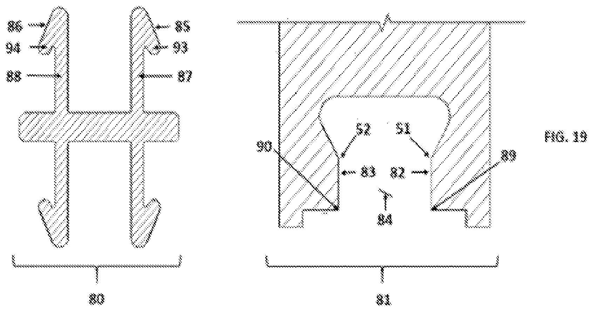

The following specification is divided into four sections. The first section, comprising Figures 4 and 5 focuses on the structure and fabrication of the connector element of the preferred embodiments (item 17 in Figure 4 and item 31 in Figure 5). The second section focuses on the structure and fabrication of the connector mating groove of the preferred embodiments and comprises Figures 6, 7, and 8. The third section focuses the manner in which the connector element and the mating groove of the preferred embodiments mechanically interact and comprises Figures 9 to 18. The fourth and last section focuses on an alternative connector and groove embodiment and comprises Figures 19 to 22.

Figure 4 shows the lateral embodiment of the connector system as used to connect hardwood flooring. The upper detail shows the connector system prior to assembly, and the lower detail shows the assembled system wherein the two floor board elements are mechanically joined by the connector. The arrows in the upper figure show the direction in which the joined elements move relative to the connector during assembly. The descriptor "lateral" in this embodiment indicates that the assembly motion is in a lateral direction, i.e., parallel to the flat upper surfaces of the floor boards and normal to the joined faces.

Figure 5 shows the normal embodiment of the connector system as used to connect hardwood flooring. The upper detail shows the connector system prior to assembly, and the lower detail shows the assembled system wherein the two floor board elements are mechanically joined by the connector. The arrows in the upper figure show the direction in which the joined elements move relative to the connector during assembly. The descriptor "normal" in this embodiment indicates that the motion of the connector relative the floor boards is normal to the flat upper surfaces of the boards.

In Figure 4, items 1 and 3 are left and right floor boards respectively, and items 2 and 4 are their respective decorative surfaces. Item 17 is a lateral connector element having left split-tongue element 18 and right split-tongue element 19. The two split-tongues 18 and 19 are formed on either side of base plate 20. The left split-tongue 18 has two flexible arms 21 and 22, and right split-tongue 19 has two flexible arms 23 and 24. The flexible arms 21, 22, 23, and 24 have outward facing nubs 41, 42, 43, and 44 respectively at their distal ends. Left split-tongue 18 mates with groove 25 in left floor board 1 and right split-tongue 19 mates with groove 26 in right floor board 3. Said nubs 41 and 42 contact the side-walls of said mating groove 25 of said split-tongue 18; and said nubs 43 and 44 contact the side-walls of the said mating groove 26 of said split-tongue The split-tongues 18 and 19 in Figure 4 are similar to the solid tongue 5 in Figure 1 in the sense that each split-tongue and each solid tongue mate with one groove. That is, the solid tongue 5 mates with the groove 7 in Figure 1 and, similarly, the split-tongues 18 and 19 mate with the grooves 25 and 26 respectively in Figure 4. The solid tongue in Figure 1, however, differs from the split-tongues in Figure 4 in that the solid tongue in Figure 1 is a monolithic and relatively stiff structure, whereas the split-tongues in Figure 4 is comprised of at least two relatively flexible arms.

In Figure 5, items 1 and 3 are left and right floor board respectively, and items 2 and 4 are their respective decorative surfaces. Item 31 is a normal connector element having left split-tongue 33 and right split-tongue 36. The two split-tongues 33 and 36 are supported on the left and right sides respectively of base plate 32. The base plate 32 has a left extension 55 and a right extension 56. The left split-tongue 33 has two flexible arms 34 and 35 respectively, and right split-tongue 36 has two flexible arms 37 and 38 respectively. The flexible arms 34, 35, 37, and 38 have outward facing nubs 98, 99, 100, and 101 respectively at their distal ends. The left split-tongue 33 mates with the mating groove 39 in the left floor board 1, and the right split-tongue 36 mates with the mating groove 40 in the right floor board 3.

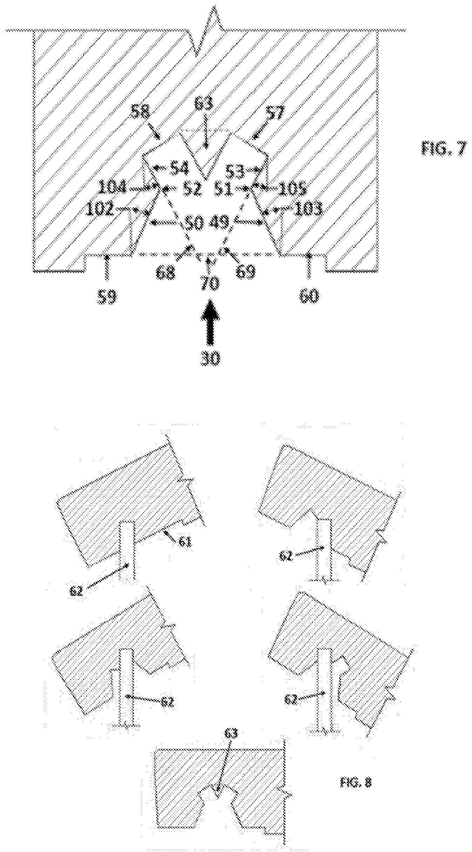

The mating groove design for the normal connector, item 31 in Figure 5, is shown in Figure 6. The groove is fabricated into the connector-receiving surface opposite the decorated surface 4 of right floor board 3. The groove consists of five regions arranged sequentially in the direction 30 of tongue insertion into the groove. The first region is a recess region defined by recess upper surfaces 47 and 48. The upper surface 47 of the recess region receives the normal connector base plate 32 and upper surface 48 is receives the base plate extension 56 in Figure 5. The recess region is followed by an entry region defined by converging sidewalls 49 and 50; an apex region defined by minimum groove width points 51 and 52; a hold region defined by diverging sidewalls 53 and 54; and groove cap or termination region defined by surfaces 57 and 58 and by triangular element 63. The groove sidewall angles are defined as follows: angles 102 and 103 are the left and right entry region convergence angles respectively; and angles 104 and 105 are the left and right hold region divergence angles respectively. The triangular element 63 is part of the groove cap and it may be kept in place or it may be removed with no impact on the operation of the connector system. In Figure 6, items 49, 51, and 53 form the right sidewall and items 50, 52 and 54 form the left sidewall of its groove. Similarly, in Figure 7, items 49, 51, and 53 form the right sidewall and items 50, 52 and 54 form the left sidewall of its groove.

During connector element insertion into its mating groove, the outward facing nubs on the flexible arms contact the converging walls of the mating groove entry region causing the arms to bend or deflect inward. The maximum deflection occurs when the arm nubs reach the groove apex. The maximum arm bending stress occurs this point, and consequently, the groove minimum width at the apex is selected to avoid significant plastic deformation of the flexible arms as they pass the groove apex during split-tongue insertion.

Continued insertion of the tongue past the groove apex causes the nubs to contact the diverging walls of the hold region and the associated arm deflection to decrease. The connector becomes fully inserted into its mating groove when the base plate 32 and its extension 56 in Figure 5 rest on the groove upper recess surfaces 47 and 48 in Figure 6. The residual arm deflection, i.e., the split- tongue arm deflection at full insertion, though less than that maximum arm deflection associated with the nubs at the groove apex, is significantly not zero.

The uniform thickness of the normal connector shown in Figure 5 make the connector amenable to extrusion via a simple flat plate extrusion die.

The mating groove for the lateral connector, item 17 in Figure 4, is shown in Figure 7. The groove is fabricated into the joining surfaces of boards 1 and 3 in Figure 4. The lateral connector mating groove shown in Figure 7 consists of five regions arranged sequentially in the direction 30 of tongue insertion into the groove. These regions are: a recess region defined by recess upper surfaces 59 and 60 to accept base plate extensions 45 and 46 in Figure 4; an entry region defined by converging sidewalls 49 and 50; an apex region defined by minimum groove width points 51 and 52; a hold region defined by diverging sidewalls 53 and 54, and groove cap or termination region 57 and 58, and by triangular element 63. The groove sidewall angles are defined as follows: angles 102 and 103 are the left and right entry region convergence angles respectively; and angles 104 and 105 are the left and right hold region divergence angles respectively. The triangular element 63 is part of the groove cap and it may be kept in place or it may be removed with no impact on the operation of the connector system.

In Figure 4, the base plate extensions 45 and 46 of base plate 20 serve two functions:
1. limit the extent to which the split-tongue can be drawn into the groove and, hence, set the location of the fully inserted split-tongue past the apex and the associated residual split- tongue arm deflection,
2. provide vertical structural support to those portions 28 and 29 of the floor boards that overhang the connector in Figure 4.

In Figure 5, the base plate 32 provides vertical support for those portions 108 and 109 that overhang the normal connector. Base plate 32, in conjunction with base plate extensions 55 and 56 in Figure 5, act to limit the extent to which the split-tongue can be drawn into its mating groove and, hence, set the location of the fully inserted split-tongue past the apex and the associated residual split-tongue arm deflection.

A key feature of the normal connector groove structure shown in Figures 6 is that the left hold region extension line 65 of said left hold region sidewall 54; and the right hold region extension line 66 of said right hold region sidewall 53, respectively, pass through said groove entrance 67. Similarly, a key feature of the lateral groove design shown in Figures 8 is that the left hold region extension line 68 of said hold region sidewall 54; and the right hold region extension line 69 of said left hold region sidewall 53, respectively, pass through said groove entrance 70. In contradistinction to the Baker and Vitale groove shown in Figure 2, this allows both grooves to be fabricated using cutters with a cutter diameter greater than the corresponding maximum groove width. That is, with a high-speed cutter such as a circular saw.

Figure 8 shows how, subsequent to cutting the base plate recess region 61, the remainder of the groove can be fabricated via four sequential circular saw cuts made via circular saw blade 62. The first and second saw cuts are shown in the left and right figures in the upper detail. The third and fourth saw cuts are shown in the left and right figures in the middle detail. The resulting final groove shape is shown in the single detail at the bottom of the figure.

For each saw cut, Figure 8 shows the saw location relative to the floor board for each saw cut and the resulting groove geometry. Though shown in a particular sequential order in Figure 8, these four saw cuts can, actually, be performed in any sequential order. The ability to form the groove using a series of sequential high-speed circular saw cuts is a key feature in allowing the grooves to be fabricated at a linear cutting speed that is high enough for economical flooring production.

Figure 9 shows said lateral connector 17 of Figure 4 at three significant locations during split- tongue insertion into said mating groove 26. The upper detail in Figure 9 shows the lateral connector 17 and mating groove 26 at the beginning of insertion of the split-tongue into the said mating groove of left floor board 3. At that point, no arm deflection has been induced by the interaction of the flexible arm nubs with the mating groove sidewall; and, hence, no deflection force is applied to the arms by the groove side walls. The lower left detail in Figure 9 shows said connector 17 inserted into said mating groove 26 to the point where the split-tongue flexible arm nubs are in contact with the groove apex. The arms are now deflected in response to forces applied to the arm nubs by the groove sidewalls. The arm deflection 64 is at its maximum value in response to the maximum arm deflecting forces 76 and 77. The lower right detail in Figure 9 shows the connector 17 at full insertion into its mating groove 26. At full insertion the only intended contact between the flexible arm and the groove is where the nubs contact the hold ramp, the flexible arms should not contact the apex region after full insertion. The corresponding fully inserted arm deflection forces, 78 and 79, are less than the maximum arm deflection forces 76 and 77 respectively. It should be noted, however, that the fully inserted arm deflection 61, though less than the maximum arm deflection 64, is significantly not zero; and consequently, the full insertion arm deflection forces 78 and 79, though less than the maximum arm deflection forces,76 and 77, are similarly, significantly not zero. This is a defining feature of the lateral connector and the mating groove structure.

Figure 10 shows two significant locations of the right side of normal connector 31 during insertion into its mating groove 40. The dotted outlines in the left and right details of Figure 10 show the shape and location of split-tongues 36 just prior to full insertion into mating groove 40. The solid outline in the left detail of Figure 10 shows the split-tongue 36 inserted into mating groove 40 to the point where the left and right nubs 100 and 101 respectively on left and right flexible arms 37 and 38 respectively, are in contact with the left and right apex points 52 and 51 respectively of mating groove 40. The solid outline in the right detail of Figure 10 shows the connector 31 fully inserted into mating groove 40 at which point the left and right nubs 100 and 101 respectively on left and right flexible arms 37 and 38 respectively, of split-tongue 36 are in contact with the left and right hold ramp sidewalls 53 and 54 respectively, of mating groove 40; and the upper surface support base 32 of connector 31 is in contact with the upper recess surfaces 47 and 48 of mating groove 40.

It is important to note that the flexible arms are intended to not make contact with the groove apex region.

The left and right flexible arms 37 and 38 respectively in Figure 10 are deflected inward in response to forces applied to them by the groove sidewalls. In the left detail of Figure 10, the arm deflection 64 is at its maximum value, and the corresponding arm deflecting forces 76 and 77 are at their maximum values, when the left and right nubs 100 and 101 respectively are at the left and right groove apex points 52 and 51 respectively. The right detail in Figure 10 shows the connector 31 at full insertion into mating groove 40. The left and right nubs 100 and 101 respectively are now in contact with left and right hold ramps 54 and 53 respectively. The corresponding fully inserted arm deflection forces, 78 and 79, are less than the maximum arm deflection forces 76 and 77 respectively. It should be noted, that the fully inserted arm deflection 61, though less than the maximum arm deflection 64, is significantly not zero; and consequently, the full insertion arm deflection forces 78 and 79, though less than the maximum arm deflection forces 76 and 77, are similarly, significantly not zero. This is a defining feature of the normal connector and the mating groove structure.

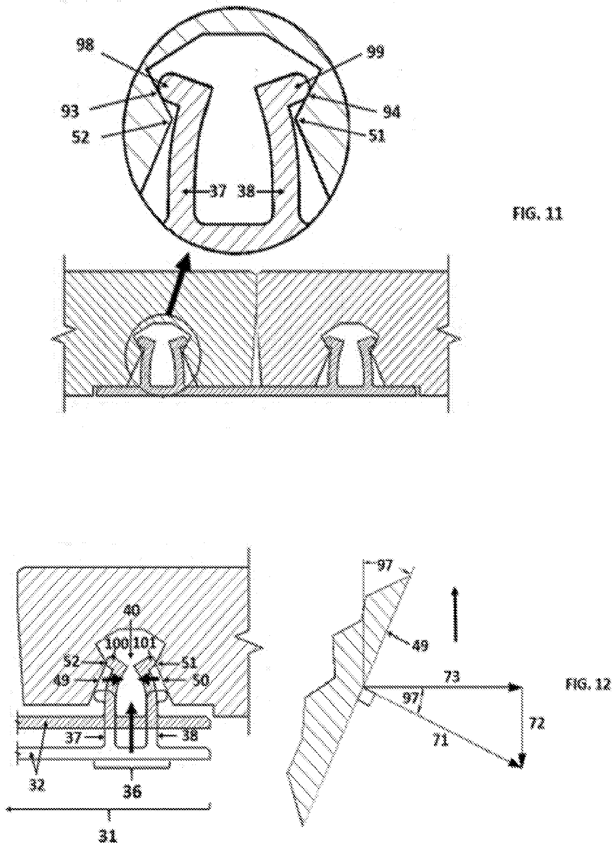

The geometric interaction between the groove sidewalls and the split-tongue arms is an important feature of the present connector system. As seen in Figure 11, the length of split-tongue arm nubs 98 and 99 is selected so that, at full tongue insertion, contact between the split-tongue arms 37 and 38 and the mating groove sidewall occurs only via nubs 98 and 99 at points 93 and 94 within the diverging or hold region of the groove, and not at the groove apex points 51 and 52 or at any other location along the length of the flexible arms. The mechanical interaction between the entry region converging groove sidewalls and the split- tongue flexible arms is an important feature of the present connector system. The left detail in Figure 12 shows the right side of a normal connector 31 with split-tongue 36 protruding upward from base support 32, as said split tongue moves into its mating groove 40, in the direction of the vertical arrow, from the beginning-of-insertion location (shown by the unshaded connector outline) to the apex -location (shown by the shaded connector outline) where the left and right nubs 100 and 101 respectively contact left and right apexes 52 and 51 respectively of said mating groove. In this detail, the entry region left and right converging sidewalls, 50 and 49, respectively, of mating groove 40 act to deflect the left and right flexible arms 37 and 38 of split-tongue 36 inwardly (in the direction of the horizontal arrows respectively) as connector element 31 moves into mating groove 40.

The right detail of Figure 12, shows in vector format, and in the absence of sidewall-to-nub friction, the force 71 and the force components 72 and 73 imposed on the left flexible arm 37 of split-tongue 36 via nub 100 when said nub is in contact with converging sidewall 49 of said mating groove converging entry region. In the absence of friction, the force 71 is, of necessity, normal to the groove left sidewall surface 49. Since said left sidewall surface corresponds to the entry region of said groove, angle 97 is negative and corresponds to a converging channel. The force vector 71 acting on the nub is shown decomposed into two orthogonal vector components: a vertically directed force component 72 acting opposite the direction of tongue insertion, and a horizontally directed force component 73 acting normal to the direction of tongue insertion. Force 73 is the force responsible for the inward deflection of the split-tongue left flexible arm 37. Force component 72 acts in a direction opposite that of split-tongue insertion and, hence, tends to resist entry of the split-tongue 36 into its mating groove 40.

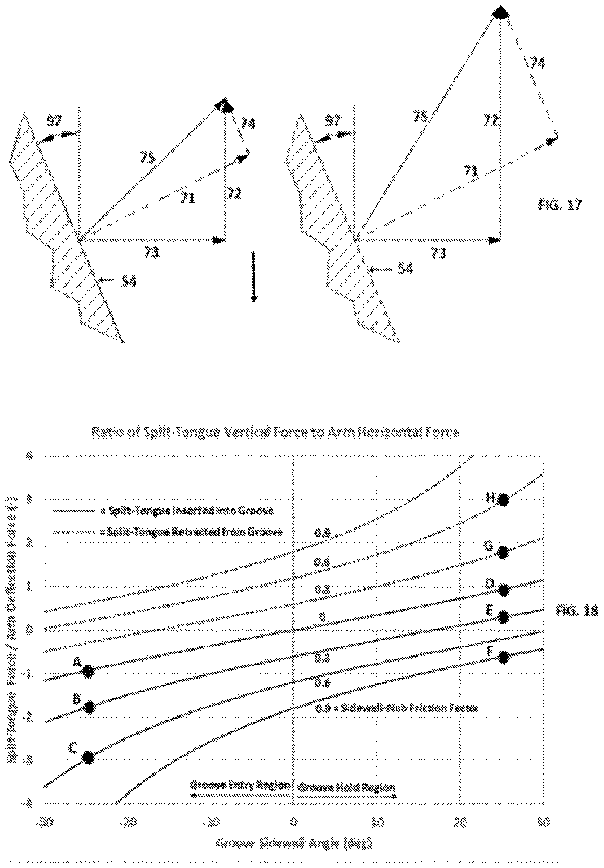

Since, in the right detail of Figure 12, the entrance resisting force component 72 acts only on left nub 100 of flexible arm 37 of split-tongue 36, and since said split-tongue has a second, essentially identical, flexible arm 38, the total force resisting insertion of said split-tongue into said mating groove is twice the magnitude of force 72. The condition of zero friction and a - 25° value of sidewall angle 97 corresponds to Point A in Figure 18 and the corresponding force resisting insertion of the split-tongue into the groove is 0.933 times the value of arm deflection force 73. The arm deflection force 73 is zero at said beginning-of-insertion location and increases monotonically as the split-tongue moves from that location to said apex-location. Consequently, the force resisting split-tongue insertion of the split-tongue similarly increases monotonically from zero force to its maximum value as the split-tongue moves from said beginning-of-insertion to said apex location.

A frictionless force interaction between said mating groove sidewall 49 and said left flexible arm nub 100 in Figurer 12 cannot be achieved in practice and, consequently, the effect of friction on the sidewall-to-nub forces must be taken into account. In the following, as typically done, the friction effect is addressed in terms of an associated friction coefficient. That is, the magnitude of the sidewall friction force 74 acting on the flexible arm nub 100 is given by the product of said friction coefficient and the sidewall surface normal force 71, and the friction force acts parallel to the sidewall surface and in the direction that opposes the sliding motion of the nub along the sidewall surface.

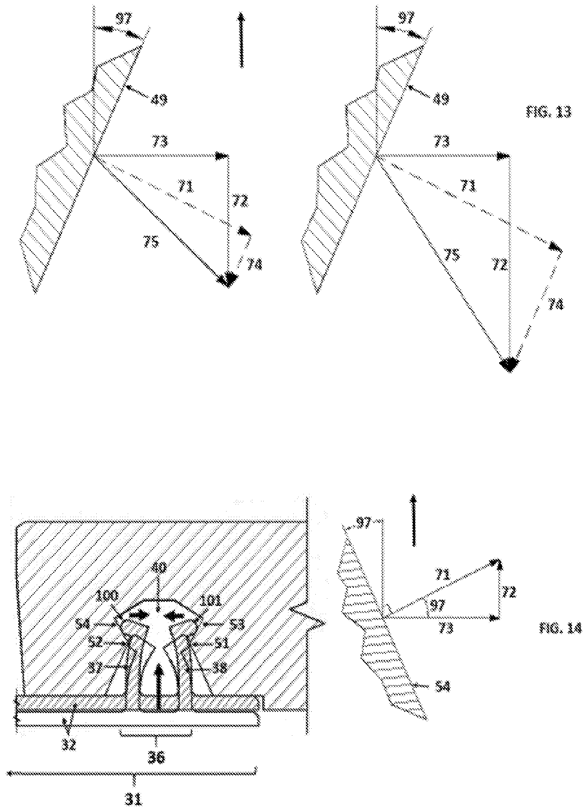

Figure 13, shows the effect of friction on the forces acting on said left flexible arm nub by said converging groove sidewall 49 of the mating groove entry region. Force vector 71 is the nub force vector component normal to surface 49; force vector 74 is the associated friction force vector; and force vector 75 is the resultant force act on the nub. As was done in Figure 12, the resultant force vector 75 is decomposed into a two orthogonal force component vectors: a force vector component 73 responsible for the flexible arm deflection, and a force vector component 72 resisting entry of the nub into the groove.

The left detail in Figure 13 corresponds to a friction coefficient of 0.3. Since there are two flexible arms 37 and 38 on split-tongue 36, the force resisting entry of said split-tongue into said groove entry region is twice the magnitude of force component 72 in Figure 13 and corresponds to Point B in Figure 18, and has a magnitude that is -1.782 times the magnitude of the force component 73 deflecting the split-tongue flexible arm. Said force resisting entry of the split-tongue into said groove entry region has a force magnitude 91% greater than the force magnitude resisting entry of the split-tongue into the groove in Figure 12 The right detail in Figure 13 corresponds to a friction coefficient of 0.6. The force component resisting entry of the split-tongue into the mating groove entry region corresponds to Point C in Figure 18 and has a magnitude that is -2.961 times the magnitude of the force 73 deflecting the split-tongue flexible arm. This force magnitude is 217% greater than the force magnitude of corresponding force component 72 resisting entry of the split-tongue into the mating groove entry region in Figure 12.

The mechanical interaction between the hold region diverging groove sidewalls and the split- tongue flexible arms is an important feature of the present connector system. The left detail in Figure 14 shows the right side of a normal connector 31 with split-tongue 36 protruding upward from base support 32, as said split tongue moves into its mating groove 40, in the direction of the vertical arrow, from said apex-location (shown by the unshaded connector outline) to the fully- inserted-location (shown by the shaded connector outline) where the left and right nubs 100 and 101 respectively contact left and right hold region diverging sidewalls 54 and 53 respectively of said mating groove. In this detail, the hold region left and right diverging sidewalls, 54 and 53, respectively, of mating groove 40 act to reduce the inward deflection of the left and right flexible arms 37 and 38 of split-tongue 36) as connector element 31 moves into mating groove 40.

The right detail of Figure 14, shows in vector format, and in the absence of sidewall-to-nub friction, the force 71 and the force components 72 and 73 imposed on the left flexible arm 37 of split-tongue 36 via nub 100 when said nub is in contact with diverging sidewall 54 of said mating groove diverging hold region. In the absence of friction, the force 71 is, of necessity, normal to the groove left sidewall surface 54. Since said left sidewall surface corresponds to the hold region of said groove, angle 97 is positive and corresponds to a diverging channel. The force vector 71 acting on the nub is shown decomposed into two orthogonal vector components: a vertically directed force component 72 acting in the direction of tongue insertion, and a horizontally directed force component 73 acting normal to the direction of tongue insertion. Force 73 is the force responsible for the inward deflection of the split-tongue left flexible arm 37. Force component 72 acts in the direction of split-tongue insertion and, hence, tends to aid entry of the split-tongue 36 into mating groove 40. Since, in the right detail of Figure 14, the entrance resisting force component 72 acts only on left nub 100 of flexible arm 37 of split-tongue 36, and since said split-tongue has a second, essentially identical, flexible arm 38, the total force resisting insertion of said split-tongue into said mating groove is twice the magnitude of force 72. For a sidewall angle, 97, value of +25° and zero nub-to- sidewall friction, the force aiding insertion of the split-tongue into the groove is 0.933 times the force deflecting the split-tongue flexible arm; and corresponds to Point D in Figure 18. The arm deflection force 73 is maximum at said apex -location and decreases monotonically as the split- tongue moves from that location to said fully-inserted-location. Consequently, the frictionless force aiding split-tongue insertion of the split-tongue similarly decreases monotonically from a maximum force value at the apex -location to a lessor force value as the fully-inserted-location.

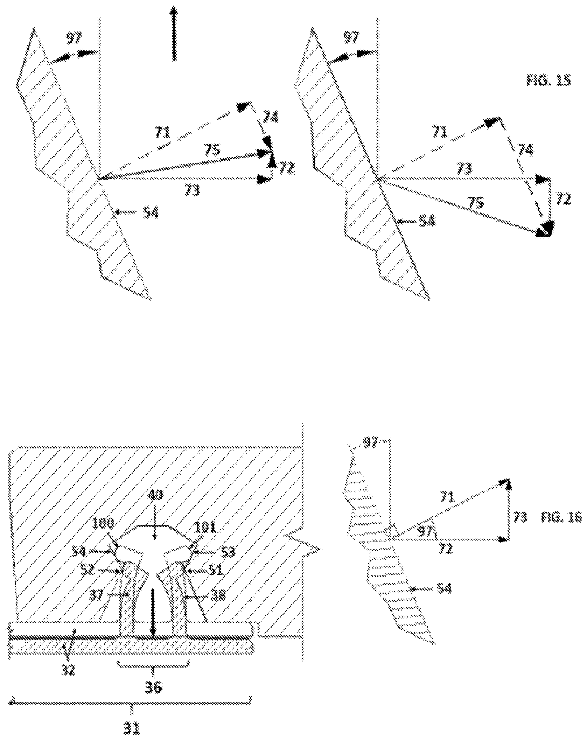

Figure 15, shows the effect of friction on the forces acting on said left flexible arm nub by said diverging groove sidewall 54 of the said mating hold or diverging wall region. Force vector 71 is the nub force vector component normal to surface 54; force vector 74 is the associated friction force vector; and force vector 75 is the resultant force act on the nub. As was done in Figure 14, the resultant force vector 75 is decomposed into a two orthogonal force component vectors: a force vector component 73 responsible for the flexible arm deflection, and a force vector component 72 aiding (or resisting) entry of the nub into the groove.

The left detail in Figure 15 corresponds to a friction coefficient of 0.3. Since there are two flexible arms 37 and 38 on split-tongue 36, the force resisting entry of the split-tongue into said groove entry region is twice the magnitude of force component 72 in Figure 15 and corresponds to Point E in Figure 18, and has a magnitude that is 0.292 times the magnitude of the force component 73 deflecting the split-tongue flexible arm. Said force aiding entry of the split-tongue into said groove entry region has a force magnitude 31% smaller than the force magnitude aiding entry of the split-tongue into the groove in Figure 14

The right detail in Figure 15 corresponds to a friction coefficient of 0.9. (The 0.9 friction factor value was selected in this detail, rather than the corresponding value of 0.6 in Figure 13, simply to make the diagram visually clearer.) The force component now resists entry of the split-tongue into the mating groove entry region corresponds to Point F in Figure 18 and has a magnitude that is -0.611 times the magnitude of the force 73 deflecting the split-tongue flexible arm. The negative value in Figure 18 indicates that the force resists entrance of said split-tongue into said mating groove.

The left detail in Figure 16 shows the right side of a normal connector 31 with split-tongue 36 protruding upward from base support 32, as said split tongue moves out of its mating groove 40, in the direction of the vertical arrow, from its fully-inserted-location with left and right nubs 100 and 101 respectively, contacting the diverging sidewalls 54 and 53 location (shown by the unshaded connector outline) to the groove apex-location where said left and right nubs, respectively, are at left and right groove apex locations 52 and 51, respectively, of said mating groove (shown by the shaded connector outline). In the absence of friction, the force acting on the flexible arm nub are independent of the direction of split-tongue motion. Hence the force diagram in the right detail is Figure 16 is identical to that in the right detail of Figure 14, and the force resisting retraction of the split tongue from the groove again corresponds to Point D in Figure 18, and the magnitude of the force resisting removal of the split-tongue into the groove is 0.933 times the magnitude of the force deflecting the split-tongue flexible arm.

Figure 17, shows the effect of friction on the forces acting on the right flexible arm nub as the split- tongue is retracted from the groove hold region. Force vector component 71 is the force vector normal to sidewall surface 54; force vector 74 is the associated friction force vector component; and force vector 75 is the resultant force vector acting on the nub. As was done in Figure 16, the resultant force 75 is decomposed into two orthogonal force vector components: a force vector component 73 responsible for the flexible arm deflection, and a force component vector 72 aiding or resisting entry of the nub into the groove.

The left detail in Figure 17 corresponds to a friction coefficient of 0.3. The force resisting retraction of the split-tongue into the groove corresponds to Point G in Figure 18 and has a magnitude that is 1.782 times the magnitude of the force vector component 73 required to deflect the flexible arm. This force magnitude is 1.91 times greater than the magnitude of corresponding force vector component 72 in Figure 16. The right detail in Figure 17 corresponds to a friction coefficient of 0.6. The force resisting entry of the split-tongue into the groove corresponds to Point H in Figure 18 and has a magnitude that is 2.961 times the magnitude of the force 73 required to deflect the flexible arm. This force magnitude is 217 times greater than the magnitude of the corresponding force component 72 in Figure 16.

Figure 18 is a plot of the ratio of the split-tongue force component in the split-tongue insertion direction to flexible arm deflection force as a function of groove sidewall angle, nub-to-sidewall friction factor, and the direction of split-tongue motion relative to the groove. A positive value corresponds to a force component aiding split-tongue insertion or resisting split-tongue retraction. A negative value corresponds to a force component resisting split-tongue insertion or aiding split- tongue retraction. A negative groove sidewall angle corresponds to the groove entry or converging sidewall region and positive rove sidewall angle corresponds to the groove hold or diverging sidewall region. The solid curves in the figure correspond to the split-tongue moving into the groove and the dashed curves correspond to the split-tongue moving out of the groove.

For a zero friction factor the force ratio is independent of the motion of the split-tongue relative to the groove and the corresponding curve is shown solid. In this special case the force ratio depends only on the groove sidewall angle and is positive when the sidewall angle is positive (i.e., sidewalls diverging), and is negative when the sidewall angle is negative (i.e., sidewalls converging)

The actual split-tongue insertion or retraction force is obtained from Figure 18 by multiply the above split-tongue force ratio by the flexible arm deflection force. The latter force depends on:
1. Connector geometry (e.g., flexible arm thickness to flexible arm length)
2. Connector material properties (e.g., flexural modulus)
3. Flexible arm deflection (as limited by the connector material bending yield strength)

Consequently, it is clear that the split-tongue force, in addition to depending on the parameters shown explicitly in Figure 18 (i.e., the side-wall angle, friction factor, and direction of split-tongue motion relative to the groove), also depends on the connector geometry and material properties. The latter two factors mean that the connector system insertion and retraction forces can be changed simply by changing the connector material or geometry and without any corresponding changes to the groove geometry. In Figure 18, Point A corresponds to the right detail in Figure 12 and Points B and C correspond to the left and right details of Figure 13 respectively; Points D corresponds to right detail in Figures 14 and 16, and Points E and F correspond to the left and right details of Figure 15 respectively; Points G and H correspond to the left and right details of Figure 17 respectively.

The preferred connector system described above, is characterized by eleven features:
1. Split-tongues having two flexible arms.
2. Outward facing nubs at the distal end of each flexible arm.
3. A base plate with two split-tongues projecting in the same direction from its ends or projecting in opposite directions from its faces.
4. Base plate extensions on either end of the base plate
5. A mating groove consisting of a recess region, a converging entry region, a minimum width apex region, a diverging hold region, and a cap or termination region arranged sequentially in the direction of tongue insertion.
6. Hold region extension lines that passes with margin through the entrance region of the groove.
7. Contact between the flexible arms and the groove sidewalls occurring only at the distal end of the flexible arm nubs
8. Further full insertion motion of the split-tongue into the groove is prevented by contact of the split-tongue base plate with the mating groove recess region upper surfaces.
9. Significant nonzero full insertion residual deflection.
10. Insertion and hold region force components that can be changed by changing the convergence angle of the converging insertion region and the divergence angle of the diverging hold region respectively.
11. Insertion and hold region force components that can be changed by changing the connector geometric parameters (e.g., the ratio of thickness of the flexible arms to their length) or by changing its material parameters (e.g., the connector material flexural modulus).

Figure 19 shows an alternate connector configuration 80 and an alternate mating groove configuration 81. In the left detail in Figure 19, the right and left outward facing protruding nubs 93 and 94, respectively, at the distal ends of right and left flexible arms 87 and 8, respectively, are modified to form right and left insertion ramps 85 and 86 respectively. The presence of said insertion ramps, can be used to advantage to reduce the magnitude of convergence angle of the mating groove entry or converging sidewall region.

In the right detail in Figure 19, the converging angle of the entry region of the mating groove is reduced to zero. In the preferred embodiments, the converging mating groove sidewalls 49 and 50 in Figures 6 and 7 act to deflect the split-tongue flexible arms inward during the initial stages of the split-tongue entry into its mating groove as shown in schematically in left detail in Figure 12.

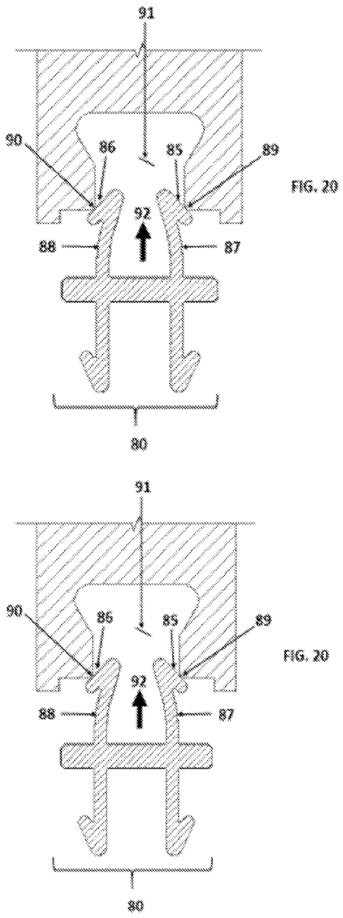

As shown in Figure 20, the inward deflection of the split-tongue arms during initial stages of split- tongue insertion into the groove is accomplished in the alternate connector configuration via the interaction of the right and left inlet corners 89 and 90, respectively, with the right and left entry ramps 85 and 86, respectively, as the split-tongue is moved in the direction of arrow 92.

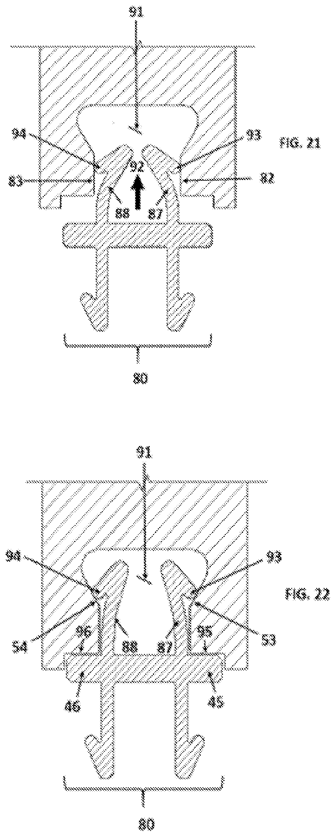

Figure 21 shows the flexible arms 87 and 88 of alternate connector 80 at maximum inward deflection in. At this condition, flexible arm nubs 93 and 94 ride along the parallel sidewall surfaces 82 and 83 of groove 91. Motion of connector 80 in the direction of insertion arrow 92, at this point is hindered only by friction between nubs 93 and 94 and sidewall surfaces 82 and 83.

Figure 22 shows the split-tongue comprising flexible arms 87 and 88 of alternate connector 80 fully inserted into its mating groove. In this condition nubs 93 and 94 interact with the diverging sidewalls 53 and 54 of groove 91 so as to generate a force component that tends to draw connector 80 into the groove. Further entrance of connector 80 into groove 91 is prevented by contact of base plate extensions 45 and 46 with the recess region upper surfaces 95 and 96 respectively of the mating groove 91.

In Figure 12 the inward deflection of the split-tongue flexible arms 37 and 38 as the split-tongue moves into its mating groove 40 is accomplished solely by the action of the mating groove entry region converging sidewalls 50 and 51 on the split-tongue flexible arm nubs 100 and 101. In figure 20, the inward deflection of the split-tongue flexible arms 87 and 88 as the split-tongue is inserted into its mating groove 91 is accomplished solely by the action of the inlet corners 89 and 90 on the nub entry ramps 85 and 86. In Figure 20 the convergence angle of the mating groove entry region is zero, and the entry region sidewalls 82 and 83 are parallel.

It clear that an intermediate structure between that shown in Figure 12 and that shown in Figure 19 can be had in the entry region sidewall convergence angle is less than that shown in Figure 12 but greater than that shown in Figure 19. In that case, as the split-tongue is inserted into its mating groove, an initial fraction of the total inward deflection of the split-tongue flexible arms is accomplished by the inlet corners 89 and 90 acting on the nub entry ramps 85 and 86 in a manner similar to that shown Figure 20; followed by the remaining fraction of inward deflection being accomplished by the mating groove entry region converging sidewalls acting on the flexible arm outward facing nubs in a manner similar to that shown in Figure 12.

In Figure 19, the alternate connector is shown for a lateral connector configuration. A lateral connector is one whose two split-tongues, such as items 18 and 19 in Figure 4 are formed on either side its base plate 20). As is the case with a lateral connector, its mating groove structure is shown fabricated into the side edge of the associated floor board as shown in Figure 7. It is clear, however, that the same alternate split-tongue structure can just as easily be adapted to the normal connector shown in Figure 5 and the mating groove integrated into the bottom surface of its associated floor board as shown in Figure 6.

## Claims

1. A connector system comprising:
a connector element (17, 31);
at least a first structural element (1) and a second structural element (3), each structural element having a first edge and a second opposite edge, and a corresponding mating groove (25, 26, 39, 40) that is formed in the structural elements extending from the first edge toward the second edge;
the connector element (17, 31) comprising a base plate (20, 32) with split-tongue elements (18, 19, 33, 36) protruding from said base plate (20, 32), each split-tongue element (18, 19, 33, 36) designed to mate with one of said mating grooves (25, 26, 39, 40) and having two flexible arms (21, 22, 23, 24, 34, 35, 37, 38) protruding from said base plate (20, 32);
said flexible arms (21, 22, 23, 24, 34, 35, 37, 38) having outward facing protruding nubs (41, 42, 43, 44, 98, 99, 100, 101) at their distal ends;
each mating groove (25, 26, 39, 40) comprising five regions arranged sequentially from the first edge toward the second edge:
a recess region for receiving the base plate (20, 32) of the connector element (17, 31) when the connector element (17, 31) is inserted into the respective groove (25, 26, 39, 40),
a converging entry region having sidewalls (49, 50) that converge toward one another, each side wall having an end,
a minimum groove width apex region (51, 52) at the ends of the converging sidewalls (49, 50),
a diverging hold region having sidewalls (53, 54) extending away from one another, and
a cap or termination region;
**characterized in that**:
said diverging hold region and said flexible arms (21, 22, 23, 24, 34, 35, 37, 38) and said nubs (41, 42, 43, 44, 98, 99, 100, 101) are disposed such that contact of the nubs (41, 42, 43, 44, 98, 99, 100, 101) with said groove diverging region imposes significant residual arm deflection after the connector element (17, 31) is fully inserted in the mating groove (25, 26, 39, 40) such that a force applied to the diverging hold region by said deflection of the flexible arms (41, 42, 43, 44, 98, 99, 100, 101) as a result of the contact between said nubs (41, 42, 43, 44, 98, 99, 100, 101) and said diverging hold region results in a force component (72) tending to pull said connector split-tongue elements (18, 19, 33, 36) into said mating groove (25, 26, 39, 40).

2. The connector system of claim 1, such that an extent of insertion of the split-tongue element (18, 19, 33, 36) into said mating groove (25, 26, 39, 40) is limited by contact of said base plate (20, 32) and associated base plate extensions (55, 56) with said groove recess region.

3. The connector system of any one of the preceding claims wherein a force magnitude resisting entrance of said split-tongue element (18, 19, 33, 36) into its corresponding mating groove (25, 26, 39, 40) depends on a value of said converging angle (102, 103) of the converging entry region.

4. The connector system of any one of the preceding claims wherein a force magnitude resisting the removal of said connector element (17, 31) from said mating groove (25, 26, 39, 40) depends on a value of said divergence angle (104, 105) of the diverging hold region.

5. The connector system of any one of the preceding claims wherein a force magnitude resisting entrance of said split-tongue element (18, 19, 33, 36) into its corresponding mating groove (25, 26, 39, 40) depends on the geometric or material properties of the connector element (17,31).

6. The connector system of any one of the preceding claims wherein a force magnitude resisting the removal of said split-tongue element (18, 19, 33, 36) from its corresponding mating groove (25, 26, 39, 40) depends on the geometric or material properties of the connector element (17,31).

7. The connector system of any one of the preceding claims, wherein the connector element (17, 31) is configured to be extruded from an extrudable material.

8. The connector system of any one of the preceding claims, wherein the connector element (31) is with said split-tongue elements (33, 36) protruding in the same direction from the ends of said base plate (31).

9. The connector system of any one of claims 1-7, wherein the connector element (17) is with said split-tongue elements (18, 19) protruding in opposite directions from opposite faces of said base plate (20).

10. The connector system of any one of the preceding claims wherein the outward facing protruding nub (41, 42, 43, 44, 98, 99, 100, 101) at distal ends of each flexible arm (21, 22, 23, 24, 34, 35, 37, 38) comprises an extension forming an outward facing insertion ramp (85, 86) to allow reduction of the converging angle (102, 103) of the converging entry region of the groove.

11. The connector system of any one of the preceding claims, wherein the hold region extension line (68, 69) exits the groove via the mating groove entrance (70).

12. The connector system of claim 11, wherein each mating groove (25, 26, 39, 40) is configured to be cut into the structural element via a tool whose maximum diameter is greater than the maximum distance between the groove sidewalls.

## Patentansprüche

1. Verbindersystem, umfassend:
ein Verbinderelement (17, 31);
mindestens ein erstes Bauelement (1) und ein zweites Bauelement (3), wobei jedes Bauelement eine erste Kante und eine zweite gegenüberliegende Kante und eine entsprechende Passnut (25, 26, 39, 40) aufweist, die in den Bauelementen von der ersten Kante bis zur zweiten Kante verlaufend ausgebildet ist;
wobei das Verbinderelement (17, 31) eine Grundplatte (20, 32) mit gespaltenen Federelementen (18, 19, 33, 36) umfasst, die von der Grundplatte (20, 32) aus vorragen, wobei jedes gespaltene Federelement (18, 19, 33, 36) so gestaltet ist, dass es zu einer der Passnuten (25, 26, 39, 40) passt, und zwei biegsame Arme (21, 22, 23, 24, 34, 35, 37, 38) aufweist, die von der Grundplatte (20, 32) aus vorragen;
wobei die biegsamen Arme (21, 22, 23, 24, 34, 35, 37, 38) nach außen zeigende vorspringende Noppen (41, 42, 43, 44, 98, 99, 100, 101) an ihren distalen Enden aufweisen;
wobei jede Passnut (25, 26, 39, 40) fünf Bereiche umfasst, die nacheinander von der ersten Kante zur zweiten Kante angeordnet sind:
einen Aussparungsbereich zum Aufnehmen der Grundplatte (20, 32) des Verbinderelements (17, 31), wenn das Verbinderelement (17, 31) in die jeweilige Nut (25, 26, 39, 40) eingesetzt ist,
einen konvergierenden Eintrittsbereich, der Seitenwände (49, 50) aufweist, die zueinander konvergieren, wobei jede Seitenwand ein Ende aufweist,
einen Scheitelbereich (51, 52) mit minimaler Nutbreite an den Enden der konvergierenden Seitenwände (49, 50),
einen divergierenden Haltebereich, der Seitenwände (53, 54) aufweist, die sich voneinander weg erstrecken, und
einen Kappen- oder Anschlussbereich;
**dadurch gekennzeichnet, dass**:
der divergierende Haltebereich und die biegsamen Arme (21, 22, 23, 24, 34, 35, 37, 38) und die Noppen (41, 42, 43, 44, 98, 99, 100, 101) so angeordnet sind, dass ein Kontakt der Noppen (41, 42, 43, 44, 98, 99, 100, 101) mit dem divergierenden Bereich der Nut eine signifikante Restarmauslenkung erzwingt, nachdem das Verbinderelement (17, 31) vollständig in die Passnut (25, 26, 39, 40) eingesetzt wurde, sodass eine Kraft, die auf den divergierenden Haltebereich durch die Ablenkung der biegsamen Arme (41, 42, 43, 44, 98, 99, 100, 101) infolge des Kontakts zwischen den Noppen (41, 42, 43, 44, 98, 99, 100, 101) und dem divergierenden Haltebereich aufgebracht wird, zu einer Kraftkomponente (72) führt, die dazu beiträgt, die gespaltenen Federelemente (18, 19, 33, 36) des Verbinders in die Passnut (25, 26, 39, 40) zu ziehen.

2. Verbindersystem nach Anspruch 1, derart, dass ein Maß des Einsetzens des gespaltenen Federelements (18, 19, 33, 36) in die Passnut (25, 26, 39, 40) durch den Kontakt der Grundplatte (20, 32) und zugehöriger Grundplattenverlängerungen (55, 56) mit dem Aussparungsbereich der Nut begrenzt ist.

3. Verbindersystem nach einem der vorstehenden Ansprüche, wobei eine Größe der Widerstandskraft gegen den Eintritt des gespaltenen Federelements (18, 19, 33, 36) in seine entsprechende Passnut (25, 26, 39, 40) von einem Wert des Konvergenzwinkels (102, 103) des konvergierenden Eintrittsbereichs abhängt.

4. Verbindersystem nach einem der vorstehenden Ansprüche, wobei eine Größe der Widerstandskraft gegen die Entnahme des Verbinderelements (17, 31) aus der Passnut (25, 26, 39, 40) von einem Wert des Divergenzwinkels (104, 105) des divergierenden Haltebereichs abhängt.

5. Verbindersystem nach einem der vorstehenden Ansprüche, wobei eine Größe der Widerstandskraft gegen den Eintritt des gespaltenen Federelements (18, 19, 33, 36) in seine entsprechende Passnut (25, 26, 39, 40) von den geometrischen oder Materialeigenschaften des Verbinderelements (17,31) abhängt.

6. Verbindersystem nach einem der vorstehenden Ansprüche, wobei eine Größe der Widerstandskraft gegen die Entnahme des gespaltenen Federelements (18, 19, 33, 36) aus seiner entsprechenden Passnut (25, 26, 39, 40) von den geometrischen oder Materialeigenschaften des Verbinderelements (17,31) abhängt.

7. Verbindersystem nach einem der vorstehenden Ansprüche, wobei das Verbinderelement (17, 31) so konfiguriert ist, dass es aus einem extrudierbaren Material extrudiert ist.

8. Verbindersystem nach einem der vorstehenden Ansprüche, wobei das Verbinderelement (31) derart gestaltet ist, dass die gespaltenen Federelemente (33, 36) in dieselbe Richtung von den Enden der Grundplatte (31) aus vorragen.

9. Verbindersystem nach einem der Ansprüche 1-7, wobei das Verbinderelement (17) derart gestaltet ist, dass die gespaltenen Federelemente (18, 19) in entgegengesetzte Richtungen von entgegengesetzten Seiten der Grundplatte (20) aus vorragen.

10. Verbindersystem nach einem der vorstehenden Ansprüche, wobei die nach außen zeigende vorspringende Noppe (41, 42, 43, 44, 98, 99, 100, 101) an distalen Enden jedes biegsamen Arms (21, 22, 23, 24, 34, 35, 37, 38) eine Verlängerung umfasst, die eine nach außen zeigende Einsatzrampe (85, 86) ausbildet, um eine Verringerung des Konvergenzwinkels (102, 103) des konvergierenden Eintrittsbereichs der Nut zu ermöglichen.

11. Verbindersystem nach einem der vorstehenden Ansprüche, wobei die Verlängerungslinie (68, 69) des Haltebereichs aus der Nut über den Passnuteintritt (70) austritt.

12. Verbindersystem nach Anspruch 11, wobei jede Passnut (25, 26, 39, 40) so konfiguriert ist, dass sie in das Bauelement mit einem Werkzeug geschnitten wird, dessen maximaler Durchmesser größer als der maximale Abstand zwischen den Nutseitenwänden ist.

## Revendications

1. Système de raccord comprenant :
un élément de raccord (17, 31) ;
au moins un premier élément structurel (1) et un second élément structurel (3), chaque élément structurel ayant un premier bord et un second bord opposé, et une rainure d'accouplement correspondante (25, 26, 39, 40) qui est formée dans les éléments structurels s'étendant du premier bord vers le second bord ;
l'élément de raccord (17, 31) comprenant une plaque de base (20, 32) avec des éléments à languette divisée (18, 19, 33, 36) dépassant de ladite plaque de base (20, 32), chaque élément à languette divisée (18, 19, 33, 36) étant conçu pour s'accoupler avec l'une desdites rainures d'accouplement (25, 26, 39, 40) et ayant deux bras flexibles (21, 22, 23, 24, 34, 35, 37, 38) dépassant de ladite plaque de base (20, 32) ;
lesdits bras flexibles (21, 22, 23, 24, 34, 35, 37, 38) ayant des tenons saillants orientés vers l'extérieur (41, 42, 43, 44, 98, 99, 100, 101) au niveau de leurs extrémités distales ;
chaque rainure d'accouplement (25, 26, 39, 40) comprenant cinq régions agencées séquentiellement du premier bord vers le second bord :
une région d'évidement pour recevoir la plaque de base (20, 32) de l'élément de raccord (17, 31) lorsque l'élément de raccord (17, 31) est inséré dans la rainure respective (25, 26, 39, 40),
une région d'entrée de convergence ayant des parois latérales (49, 50) qui convergent l'une vers l'autre, chaque paroi latérale ayant une extrémité,
une région de sommet de largeur de rainure minimale (51, 52) au niveau des extrémités des parois latérales convergentes (49, 50),
une région de maintien de divergence ayant des parois latérales (53, 54) s'éloignant l'une de l'autre, et
une région de coiffe ou de terminaison ;
**caractérisé en ce que** :
ladite région de maintien de divergence et lesdits bras flexibles (21, 22, 23, 24, 34, 35, 37, 38) et lesdits tenons (41, 42, 43, 44, 98, 99, 100, 101) sont disposés de sorte que le contact des tenons (41, 42, 43, 44, 98, 99, 100, 101) avec ladite région de divergence de rainure impose une déflexion de bras résiduelle importante après que l'élément de raccord (17, 31) est complètement inséré dans la rainure d'accouplement (25, 26, 39, 40) de sorte qu'une force appliquée à la région de maintien de divergence par ladite déflexion des bras flexibles (41, 42, 43, 44, 98, 99, 100, 101) à la suite du contact entre lesdits tenons (41, 42, 43, 44, 98, 99, 100, 101) et ladite région de maintien de divergence entraîne une composante de force (72) qui tend à tirer lesdits éléments à languette divisée de raccord (18, 19, 33, 36) dans ladite rainure d'accouplement (25, 26, 39, 40).

2. Système de raccord selon la revendication 1, de sorte qu'une étendue d'insertion de l'élément à languette divisée (18, 19, 33, 36) dans ladite rainure d'accouplement (25, 26, 39, 40) est limitée par le contact de ladite plaque de base (20, 32) et des extensions de plaque de base associées (55, 56) avec ladite région d'évidement de rainure.

3. Système de raccord selon l'une quelconque des revendications précédentes, dans lequel une amplitude de force résistant à l'entrée dudit élément à languette divisée (18, 19, 33, 36) dans sa rainure d'accouplement correspondante (25, 26, 39, 40) dépend de la valeur dudit angle de convergence (102, 103) de la région d'entrée de convergence.

4. Système de raccord selon l'une quelconque des revendications précédentes, dans lequel une amplitude de force résistant au retrait dudit élément de raccord (17, 31) de ladite rainure d'accouplement (25, 26, 39, 40) dépend d'une valeur dudit angle de divergence (104, 105) de la région de maintien de divergence.

5. Système de raccord selon l'une quelconque des revendications précédentes, dans lequel une amplitude de force résistant à l'entrée dudit élément à languette divisée (18, 19, 33, 36) dans sa rainure d'accouplement correspondante (25, 26, 39, 40) dépend des propriétés géométriques ou matérielles de l'élément de raccord (17,31).

6. Système de raccord selon l'une quelconque des revendications précédentes, dans lequel une amplitude de force résistant au retrait dudit élément à languette divisée (18, 19, 33, 36) de sa rainure d'accouplement correspondante (25, 26, 39, 40) dépend des propriétés géométriques ou matérielles de l'élément de raccord (17,31).

7. Système de raccord selon l'une quelconque des revendications précédentes, dans lequel l'élément de raccord (17, 31) est configuré pour être extrudé à partir d'un matériau extrudable.

8. Système de raccord selon l'une quelconque des revendications précédentes, dans lequel l'élément de raccord (31) est avec lesdits éléments à languette divisée (33, 36) faisant saillie dans le même sens depuis les extrémités de ladite plaque de base (31).

9. Système de raccord selon l'une quelconque des revendications 1 à 7, dans lequel l'élément de raccord (17) est avec lesdits éléments à languette divisée (18, 19) faisant saillie dans des directions opposées depuis des faces opposées de ladite plaque de base (20).

10. Système de raccord selon l'une quelconque des revendications précédentes, dans lequel la partie saillante orientée vers l'extérieur (41, 42, 43, 44, 98, 99, 100, 101) au niveau des extrémités distales de chaque bras flexible (21, 22, 23, 24, 34, 35, 37, 38) comprend une extension formant une rampe d'insertion orientée vers l'extérieur (85, 86) pour permettre la réduction de l'angle de convergence (102, 103) de la région d'entrée convergente de la rainure.

11. Système de raccord selon l'une quelconque des revendications précédentes, dans lequel la ligne d'extension de région de maintien (68, 69) sort de la rainure par l'entrée de rainure d'accouplement (70).

12. Système de raccord selon la revendication 11, dans lequel chaque rainure d'accouplement (25, 26, 39, 40) est configurée pour être découpée dans l'élément structurel via un outil dont le diamètre maximal est supérieur à la distance maximale entre les parois latérales de rainure.
